# EUROPEAN PATENT APPLICATION

(11) **EP 2 293 631 A1**
(43) Date of publication of application: **09.03.2011**
(21) Application number: 10009148.7
(22) Date of filing: 02.09.2010
(51) Int. Cl.: H04W 60/04

(54) **Apparatus and method for location management of user equipments in a generic access network**

(30) Priority: 03.09.2009 KR 20090083163
(71) Applicant: Postech Academy-Industry Foundation, Hyoja-dong, Nam-gu Pohang-si, Gyeongsangbuk-do (KR); Samsung Electronics Co., Ltd, Suwon-si, Gyeonggi-do (KR)
(72) Inventor: Lim, Wan-Seon, Pohang-shi Kyungsangbuk-do (KR); Jung, Kyoung-Hak, Icheon-si Gyeonggi-do (KR); Kim, Dong-Wook, Daegu (KR); Suh, Young-Joo, Pohang-shi Kyunggsangbuk-do (KR)
(74) Representative: Samson & Partner

(57) **Abstract**

In apparatus for location management of a UE in a generic access network (GAN), one or more points of attachment (PoAs) are grouped together to create GAN paging area (GPA) information. The GPA information is transmitted to the UE in a register accept message during a location registration with the UE so that the UE checks the GPA information and performs a register update only when the UE moves between PoAs of different GPAs when changing PoA, thereby enabling an efficient power consumption of the UE.

## Description

The present invention relates to a technology for location management of a user equipment (UE) in a mobile communication system and, more particularly, to an apparatus and method for location management of a UE in a generic access network, which are suitable to efficiently carry out location management of a mobile UE in the generic access network to reduce power consumption of the UE.

As well-known in the art, third generation partnership project (3GPP) standardized the generic access network (GAN) technology in which voice and data services performed by a mobile communication network are provided to a UE over an IP network. The GAN is a technology that can interwork with any networks supporting IP connection, which is also widely known as unlicensed mobile access (UMA).

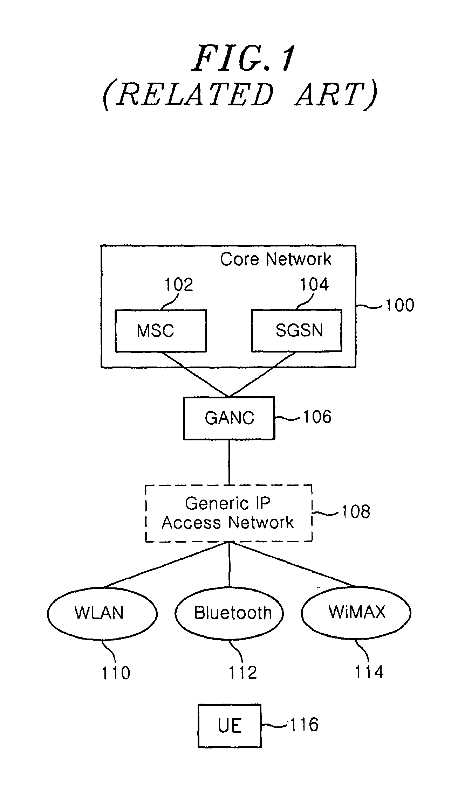

Fig. 1 is an exemplary model of network structure to which the GAN technology is applied in accordance with a related art.

Referring to Fig. 1, a generic access network controller (GANC) 106, which serves as a base station controller (BSC) or radio network controller (RNC) of an existing mobile communication network, plays the role of providing voice services and data services of the mobile communication network over a general IP network. Moreover, a variety of radio access networks, such as wireless local area network (WLAN) 110, Bluetooth 112, and world interoperability for microwave access (WiMAX) 114, are routed to the generic IP access network 108 and then finally interwork with the mobile communication network through the GANC 106.

The GANC 106 provides services such as voice calls and text messages through a mobile switching center (MSC) 102 of a core network (CN) 100, and provides packet data services through a serving general packet radio service (GPRS) support node (SGSN) 104. A user equipment (UE) 116, which may be referred to as a mobile station (MS), subscriber unit (SU), access terminal (AT), and so on in various technologies, first has to search for the GANC 106 in order to get a circuit switching (CS) service provided through the GANC 106, and carries out a registration process by sending a Generic Access-Radio Resource Control (GA-RRC) REGISTER REQUEST message to the GANC 106.

Specifically, the GANC 106 manages a point of attachment (PoA), to which the UE 116 is connected, and, when there is a change in the PoA, allows the UE 116 to transmit a GA-RRC REGISTER UPDATE message to the GANC 106 to perform the update of location information. The UE 116 is able to use voice and data services under a connected state (GA-RRC-CONNECTED) to the GANC 106, and the UE 116 is switched to an idle (GA-RRC-IDLE) mode when the services are not available for a predetermined period of time.

Meanwhile, the mobile communication network employs a power saving mechanism for efficient power consumption of a terminal in the idle mode. For instance, a universal mobile telecommunications system (UMTS) tracks the location of a UE in three areas including a location area (LA), a routing area (RA), and an UMTS radio access network (UTRAN) registration area (URA). The LA for CS service is a range in which the MSC tracks the location of a UE in an idle mode. The RA for packet switching (PS) service is an area in which the SGSN tracks the position of the UE in an idle mode. The URA is employed in the UTRAN to track the position of a UE.

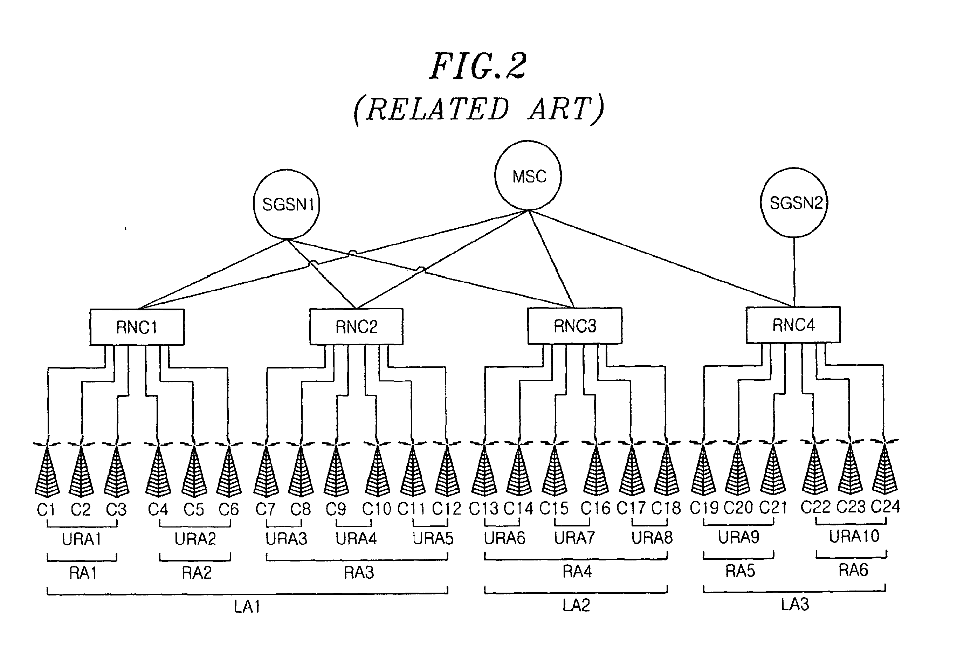

Fig. 2 illustrates the relationship among an LA, an RA, and an URA in an UMTS in accordance with a related art.

Referring to Fig. 2, a URA is a set of cells or base stations, and an RA includes one or more URAs. As such, multiple RAs can exist under one RNC. Also, the LA may generally include one or more RAs.

Therefore, when a UE is in an idle mode in a CS domain, even if a cell to which the UE is connected is changed, the UE does not update its location to the MSC as long as the LA is not changed, thereby reducing power consumption. At this point, if it is required to provide a CS service to the UE in the idle mode (e.g., if a call is coming in), the MSC transmits a paging message to all cells in the LA to which the UE belongs, and the UE receiving such a paging message sends a response message to notify of its location. Location tracking for the UE in a PS domain is performed similarly to that of the CS domain, wherein a paging message is transmitted based on RA and URA rather than based on LA.

In the UMTS as set forth above, base stations within a certain region are grouped together into one RA, and the location of a UE that has entered the idle mode is tracked for each RA or for each LA including one or more RAs. That is, even if the UE in the idle mode changes a serving base station to another, the UE in the idle mode does not update its location as long as the RA or the LA is not changed, thereby reducing power consumption.

However, the GAN standard defines that the UE has to perform a register update process to the GANC each time the UE changes its PoA. Therefore, even if the UE is in the idle mode, it has to send a REGISTER UPDATE message to the GANC when there is a change in PoA. Such an instant register update process allows the GANC to correctly forward a GA-RRC PAGING REQUEST message to the corresponding PoA, but has the problem of increase in the power consumption of the UE in the case of frequent changes in PoA.

Therefore, a primary object of the present invention is to provide an apparatus and method for location management of a user equipment in a generic access network capable of reducing power consumption of the user equipment.

In accordance with a first aspect of the present invention, there is provided an apparatus for location management of user equipments (UEs) in a generic access network (GAN), which includes:
apparatus for location management of user equipments (UEs) in a generic access network (GAN), the apparatus comprising:
   a UE adapted for transmitting a register request message containing an ID of a current point of attachment (PoA) to which the UE is currently connected, checking the information on GAN paging area (GPA) received in response to the register request, wherein the information on the GPA includes IDs of one or more points of attachment (PoAs) within a GPA to which the PoA where the terminal is located belongs, and transmitting a register update message to the GAN when moving to another PoA that is not included in the information of the GPA; and
   a generic access network controller (GANC) adapted for identifying the location of the UE based on an ID of the current PoA transmitted by the UE, and transmitting a register accept message containing the information on the GPA to the UE that made the register request.

In accordance with a second aspect of the present invention, there is provided a method for location
management of a user equipment (UE) in a generic access network (GAN), the method comprising:
configuring one or more points of attachment (PoAs) for each GAN paging area (GPA);
identifying the location of the UE based on an ID of the current PoA contained in a register request message transmitted by the UE;
transmitting a register accept message containing information about the one or more PoAs of the GPA to the UE that made the register request; and
upon receipt of a paging message requested from a mobile switching center (MSC) or serving general packet radio service (GPRS) support node (SGSN) to the UE, transmitting a paging request message to all the PoAs of the GPA.

In accordance with a third aspect of the present invention, there is provided a method for location management of a UE in a generic access network (GAN), the method comprising:
transmitting register request information containing ID information corresponding to a PoA where the UE is currently located to a generic access network controller (GANC);
storing the register accept message transmitted from the GANC, wherein the register accept message contains information of each GPA paging area (GPA) having one or more PoAs; and
performing a location register update procedure with the GANC when moving to a PoA that is not contained in the GPA.

The above and other objects and features of the present invention will become apparent from the following description of embodiments, given in conjunction with the accompanying drawings in which like characters represent like parts throughout the drawings, wherein:
Fig. 1 is an exemplary model of network structure to which a general GAN technology is applied in accordance with a related art;
Fig. 2 illustrates the relationship among an LA, an RA, and an URA in a UMTS in accordance with a related art;
Fig. 3 illustrates a register update operation in a GAN when a UE moves;
Fig. 4 illustrates an operation when a call comes in from a UE in a GAN;
Fig. 5 illustrates an operation for receiving data service in the GAN;
Fig. 6 illustrates an operation in which a GANC forwards GPA (GAN paging area) information to the UE during a GAN registration process in accordance with an embodiment of the present invention;
Fig. 7 illustrates a register update operation performed when the UE moves in the GAN in accordance with an embodiment of the present invention; and
Fig. 8 illustrates a paging procedure performed in the GAN in accordance with an embodiment of the present invention.

Hereinafter, the embodiments of the present invention will be described in detail with reference to the accompanying drawings which forms a part thereof.

Although, between two modes of a GAN: the A/Gb mode which is an interface between a user equipment and a base station; and the Iu mode which is an interface between a user equipment and an UMTS radio access network (UTRAN), the embodiments of the present invention will be described hereinafter based on the Iu mode, it should be understood that the embodiments are applicable in the same manner to the A/Gb mode.

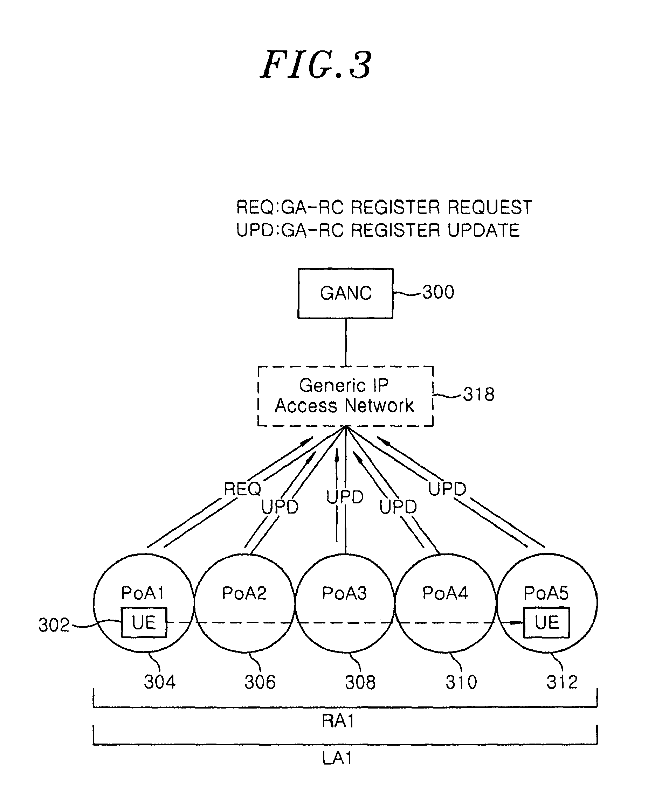

Fig. 3 illustrates a register update operation in a generic access network (GAN) when a user equipment (UE) moves.

Referring to Fig. 3, a UE 302, which is initially connected to the location of a PoA1 304, sends a generic access-resource control (GA-RC) REGISTER REQUEST message to a GANC 300 through a generic IP access network 318 to carry out registration, and then sends a GA-RC REGISTER UPDATE message to each PoA through a generic IP access network 318 to notify the GANC 300 of the location of each PoA while moving PoAs. That is, the UE 302 transmits a GA-RC REGISTER UPDATE message to the GANC 300 each time it moves from the PoA1 304 to a PoA2 306, a PoA3 308, a PoA4 310, and a PoA5 312.

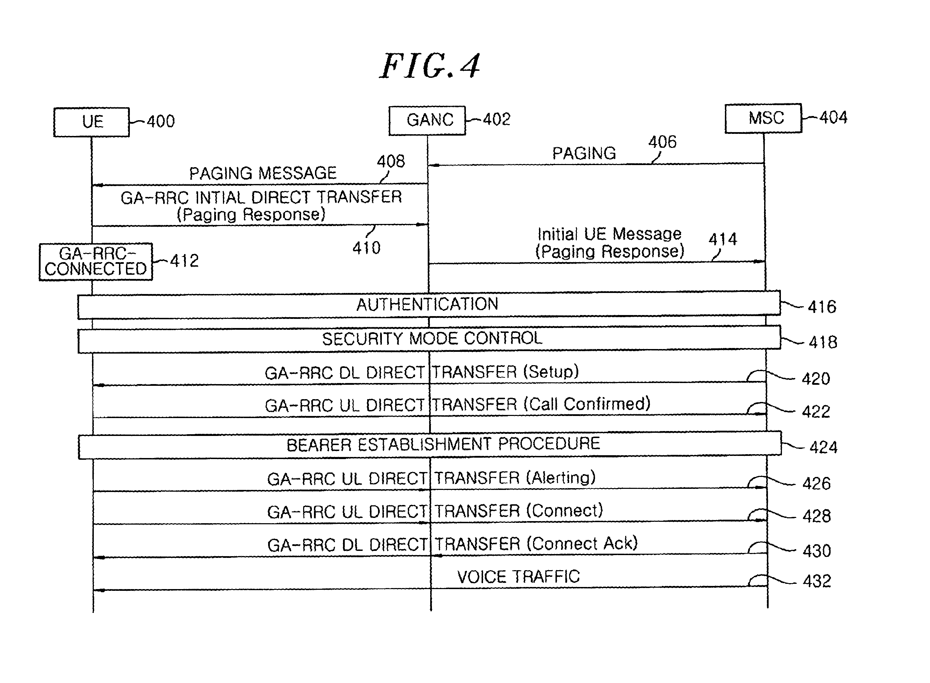

Fig. 4 illustrates an operation when a call comes in from the UE in the GAN.

In Fig. 4, a GANC 402 performs the same function as the RNC of an UMTS. Therefore, if the GANC 402 is positioned in a location area (LA) of a UE 400, a paging message sent from a mobile switching center (MSC) 404 arrives at the GANC 402 in step 406. By the way, as explained above, the UE 400 needs to send a REGISTER UPDATE message to the GANC 402 each time its POA is changed, so the GANC 402 is aware of the correct PoA to which the UE 400 is currently connected.

Therefore, the GANC 402, which has received the paging message from the MSC 404, sends a GA-RRC PAGING REQUEST message only to the PoA where the UE 400 is located in step 408, and the UE 400 that has received the GA-RRC PAGING REQUEST message transmitted to the corresponding PoA response with a GA-RRC INITIAL DIRECT TRANSFER message containing a PAGING RESPONSE message to the GANC 402 in step 410. At this point, the UE 400 is switched to a GA-RRC-CONNECTED state in step 412, and the GANC 402 forwards an initial UE message containing the PAGING RESPONSE message received from the UE 400 to the MSC 404 in step 414 so as to perform the subsequent processes for call setup.

In the subsequent process for call setup, an authentication procedure among the MSC 404, the GANC 402, and the UE 400 is performed in step S416, the control of the security mode is performed in step 418, and then the MSC 404 forwards a GA-RRC DL DIRECT TRANSFER message containing a setup message to the UE 400 via the GANC 402 in step 420. Then, the UE 400 forwards a GA-RRC UL DIRECT TRANSFER message containing a call confirmed message to the MSC 404 via the GANC 402 in step 422.

Thereafter, a bearer establishment procedure for wireless connection among the MSC 404, the GANC 402, and the UE 400 is performed in step 424, the UE 400 transmits a GA-RRC UL DIRECT TRANSFER message containing an Alerting message to the MSC 404 in step 426, and then transmits a GA-RRC UL DIRECT TRANSFER message containing a Connect message to the MSC 404 in step 428.

Then, the MSC 404 transmits a GA-RRC DL DIRECT TRANSFER message containing a Connect Ack message to the UE 400 in step 430 to perform connection and establish a bearer channel, and the UE 400 receives voice traffic transmitted from the bearer channel established by the MSC 404 in step 432.

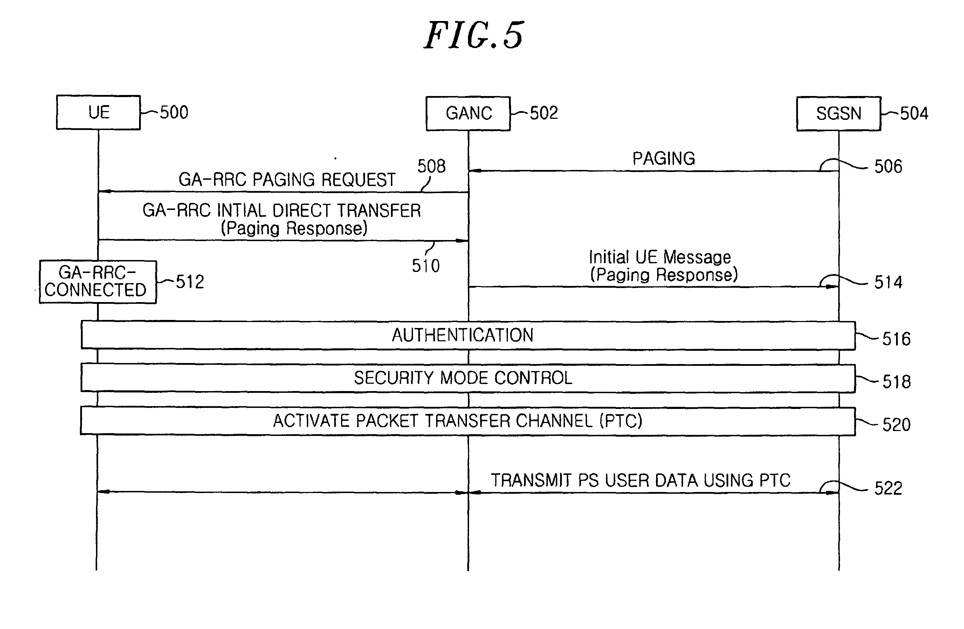

Fig. 5 illustrates an operation for getting data service in the GAN.

Referring to Fig. 5, upon receipt of downlink data towards the UE 500 in a GA-RRC-IDLE state, an SGSN 504 transmits a Paging message to the GANC 502 in step 506, the GANC 502 transfers a GA-RRC PAGING REQUEST message only to the PoA where the corresponding UE 500 is located in step 508, and the UE 500 that has received the GA-RRC PAGING REQUEST message transmitted to the corresponding PoA sends a GA-RRC INITIAL DIRECT TRANSFER message containing a Paging Response message to the GANC 502 in step 510.

The UE 500 is then switched to the GA-RRC-CONNECTED state in step 512, and the GANC 502 forwards an Initial UE message containing the Paging Response message received from the UE 400 to the SGSN 504 in step 514 so as to perform the subsequent process for data transmission and reception.

In the subsequent process for data transmission and reception, an authentication procedure among the SGSN 504, the GANC 502, and the UE 500 is performed in step 516, the control of the security mode is performed in step 518, and then a packet transport channel (PTC) is activated in step 520. Consequently, in step 522, downlink data transmitted from the SGSN 504 is transmitted to the UE 500 through the packet transport channel activated between the GANC 502 and the UE 500.

As described with reference to Figs. 4 and 5, such an instant register update operation performed in the GAN allows the GANCs 402 and 502 to correctly forward a GA-RRC PAGING REQUEST message to the corresponding PoA. However, in the case of frequent changes in PoA, power consumption of the UEs 400 and 500 may be increased.

Now, a description will be given on a method for reducing power consumption of a UE in the GAN.

In the embodiment of the present invention, the following operations are additionally defined for the basic operation of a UE performed in GANC and GAN. The GANC has a list of access point IDs (hereinafter referred to as AP-IDs) of PoAs from which the GANC permits access. Also, geographically adjacent PoAs are grouped into a GAN paging area (hereinafter referred to as GPA). In this regard, PoAs operating on different access technologies may belong to one GPA.

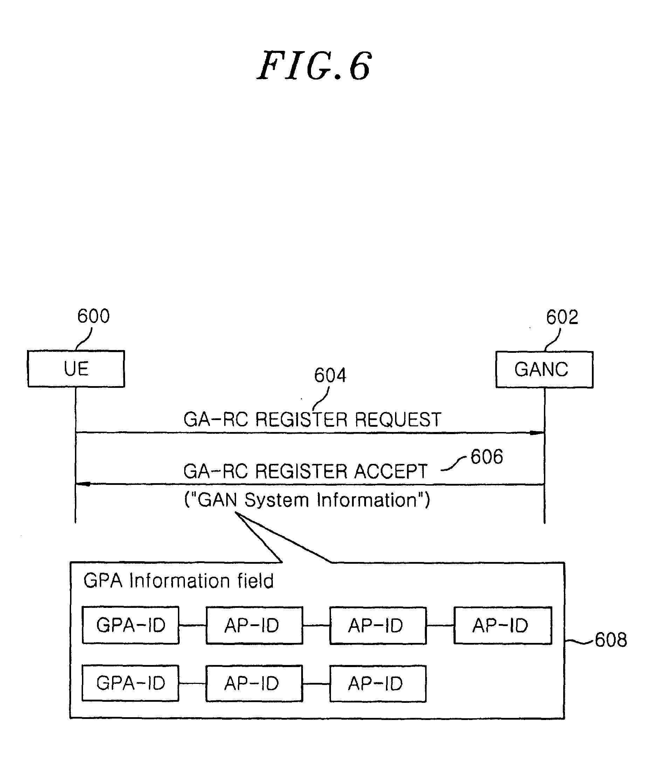

Fig. 6 illustrates an operation in which a GANC forwards information about GPA to the UE during a GAN registration process in accordance with an embodiment of the present invention.

According to the embodiment of the invention, rather than newly defining a message for GPA information forwarding, a message defined in the GAN standard is extended as follows. That is, in the GAN standard, a UE 600 transmits a GA-RC REGISTER REQUEST message containing information such as the AP-ID of the current PoA to a GANC 602 in the location registration process of step 604, and, upon receipt of it, the GANC 602 transmits a GA-RC REGISTER ACCEPT message to the UE 600.

The GA-RC REGISTER ACCEPT message contains a plurality of system information. For instance, a GPA information field 608 can be additionally included in the GA-RC REGISTER ACCEPT message. The GPA information field 608 has a structure in which IDs of GPAs (hereinafter referred to as GPA-IDs) are listed, followed by the AP-IDs of the PoAs belonging to a corresponding GPA. With this, the UE 600 becomes aware of which GPA each PoA belongs in the registration process. Also, the GANC 602 becomes aware of the GPA to which the UE 600 currently belongs based on the AP-ID contained in the GA-RC REGISTER REQUEST message.

After that, when the UE 600 in the GA-RRC-IDLE state changes its PoA, it checks whether the AP-ID of the PoA to which the UE 600 is newly connected is contained in the GPA information field 608 received from the GANC 602. If not, the UE 600 sends a register update message to the GANC 602 for the purpose of a location register update procedure.

However, if the AP-ID of the PoA to which the UE 600 is newly connected is contained in the GPA information field 608 received from the GANC 602, it is checked whether both the new PoA and the previous PoA belong to the same GPA. If the new PoA and the previous PoA belong to the same GPA, the UE 600 does not need to take any action while keeping the existing condition. On the contrary, if the new PoA and the preceding PoA do not belong to the same GPA, the UE 600 transmits a register update message to the GANC 602. In conclusion, as long as a new PoA belongs to the same GPA, a change in PoA does not require for the UE 600 to send a register update message, thereby reducing power consumption from a point of the UE 600.

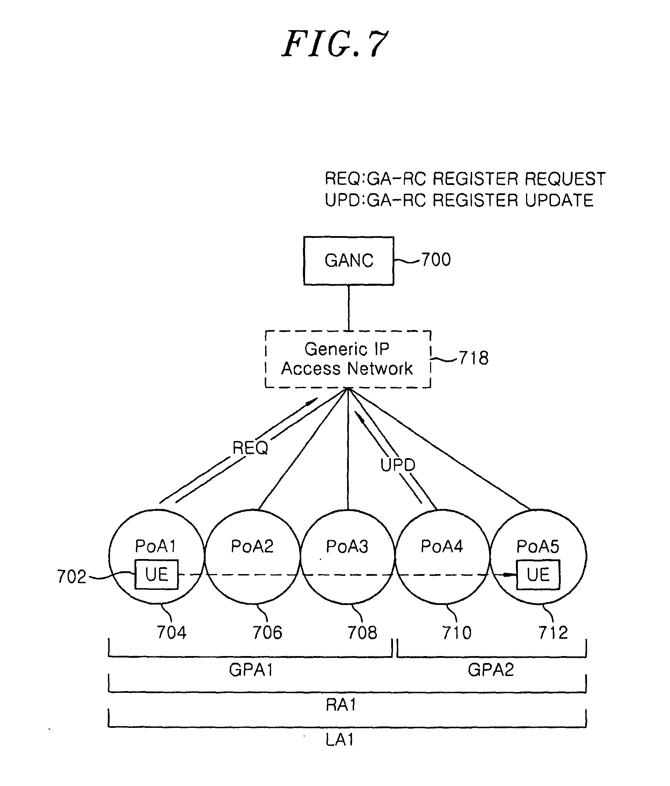

Fig. 7 illustrates a register update operation when the UE moves in the GAN in accordance with an embodiment of the present invention.

Referring to Fig. 7, for example, a PoA1 704, a PoA2 706, and a PoA3 708 belong to GPA1, and a PoA4 710 and a PoA5 712 belong to GPA2. A UE 702, which is currently connected to the location of the PoA1 704, sends a GA-RC REGISTER REQUEST message containing information, such as the AP-ID of the current PoA1 704, to a GANC 700 through a generic IP access network 718. Then, the GANC 700 sends a GA-RC REGISTER ACCEPT message to the UE 702 through a generic IP access network 718 to perform registration of the UE.

In this case, the GA-RC REGISTER ACCEPT message received by the UE 702 includes GPA information (e.g., information about only GPA1 containing the PoA of the UE 702 or information about all GPAs, i.e., GPA1 and GPA2, that are managed by the GANC 700).Since the GPA information is stored in the UE 702, the UE 70 becomes aware that information on the PoA1 704, PoA2 706, and PoA3 708 is included in GPA1.

Accordingly, when the UE 702 in the idle mode moves between PoAs, for example, from the PoA1 704 to the PoA2 706 or to the PoA3 708, the UE 702 does not need to send a GA-RC REGISTER UPDATE message to the GANC 700, thereby maintaining the idle mode.

However, if the UE 702 moves from the position of PoA 704, 706, or 708 belonging to GPA1 to the location of the PoA4 710 belongs to GPA2, the UE 702 transmits a GA-RC REGISTER UPDATE message containing the AP-ID information of the PoA4 710 to the GANC 700 to update location registration.

Meanwhile, when the UE 702 moves from the location of the PoA4 710 to the location of the PoA5 712, the UE 702 does not need to transmit a GA-RC REGISTER UPDATE message because both the PoA 710 and the PoA 712 belong to the same GPA2.

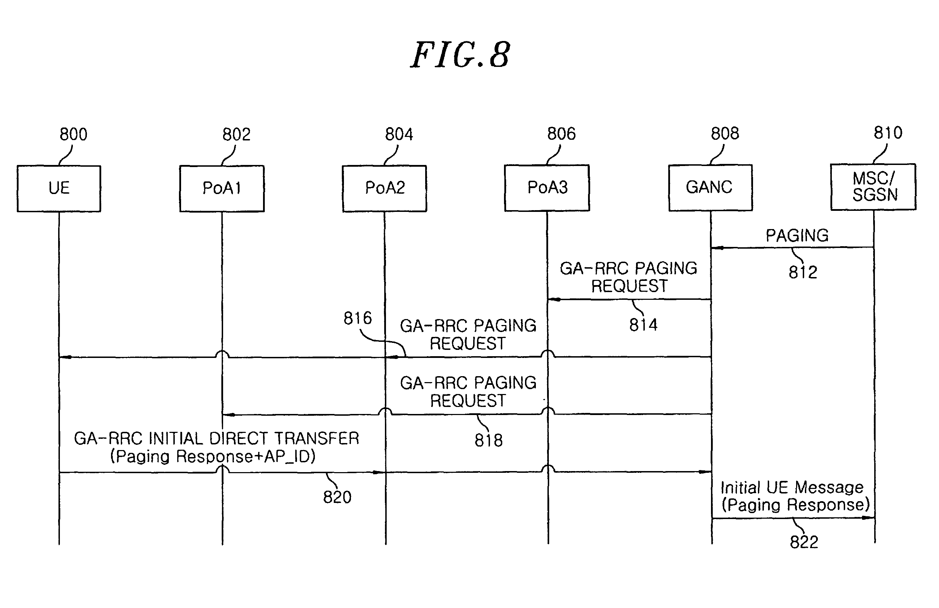

Fig. 8 illustrates a paging procedure performed in the GAN in accordance with an embodiment of the present invention.

As shown in Fig. 8, a UE 800 is currently located at a PoA2 804, wherein a PoA1 802, the PoA2 804, and a PoA3 806 belong to one GPA.

First of all, in step 812, upon receipt of a paging message from an MSC or SGSN (MSC/SGSN) 810, while a GANC 808 conventionally sends a GA-RRC PAGING REQUEST message only to the PoA (e.g. PoA2 804) to which the UE 800 is currently connected, in this embodiment, the GANC 800 is adapted to transmit a GA-RRC PAGING REQUEST message to all the PoAs in the GPA to which the UE 800 currently belongs. That is, since the PoA1 802, the PoA2 804, and the PoA3 806 belong to one GPA, the GANC 808 transmits a GA-RRC PAGING REQUEST message to the PoA3 806 in step 814, transmits a GA-RRC PAGING REQUEST message to the PoA2 804 in step 816, and transmits a GA-RRC PAGING REQUEST message to the PoA1 802 in step 818.

Then, the UE 800 receives a paging message through the PoA2 804 because it is currently connected to the PoA2 804, and the UE 800response with a paging response message and a GA-RRC INITIAL DIRECT TRANSFER message containing the AP_ID of the current PoA2 804 to the GANC 808 in step 820. Based on this message, the GANC 808 identifies the PoA2 804 where the UE 800 is currently located, and transmits an Initial UE message containing the paging response message received from the UE 800 to the MSC/SGSN 810 in step 822.

The subsequent processes will be performed in the same manner as the existing call operation and data service procedure following the authentication procedure as shown in Figs. 4 and 5.

As described above, the present invention allows a GANC to group at least one PoA together to create GAN paging area (GPA) information and then transmit the GPA information to the UE in a generic access-resource control (GA-RC) register accept message during a location registration with the UE so that the UE checks the GPA information and performs a register update only when the UE moves between PoAs of different GPAs when changing PoA.

In accordance with the present invention as explained above, actual available time of the user equipment may be increased by efficient power consumption of a UE using a technique for location management of a UE in a GAN, and may be easily applied to a currently installed GAN because a lower-level access network interworking with the GAN is not required to be modified.

While the invention has been shown and described with respect to the particular embodiments, it will be understood by those skilled in the art that various changes and modification may be made without departing from the scope of the present invention as defined in the following claims.

## Claims

1. An apparatus for location management of user equipments (UEs) in a generic access network (GAN), the apparatus comprising:
a UE adapted for transmitting a register request message containing an ID of a current point of attachment (PoA) to which the UE is currently connected, checking the information on GAN paging area (GPA) received in response to the register request, wherein the information on the paging area includes IDs of one or more points of attachment (PoAs) within a GPA to which the PoA where the terminal is located belongs, and transmitting a register update message to the GAN when moving to another PoA that is not included in the information of the GPA; and
a generic access network controller (GANC) adapted for identifying the location of the UE based on an ID of the current PoA transmitted by the UE, and transmitting a register accept message containing the information on the GPA to the UE that made the register request.

2. The apparatus of claim 1, wherein the UE stores the information of the GPA contained in the received register accept message, and the UE maintains an idle mode when moving to a PoA contained in the information of the GPA and being in the idle mode.

3. The apparatus of claim 1, wherein, upon receiving a paging message requested from a mobile switching center (MSC) or serving general packet radio service (GPRS) support node (SGSN) to the UE, the GANC transmits a paging request message to all points of attachment of the GPA.

4. The apparatus of claim 1, wherein the GPA is comprised of geographically adjacent PoAs and has a range for transmitting a paging request message once from the GANC.

5. A method for location management of a user equipment (UE) in a generic access network (GAN), the method comprising:
configuring one or more points of attachment (PoAs) for each GPA (GAN paging area);
identifying the location of the UE based on an ID of the current PoA contained in a register request message transmitted by the UE;
transmitting a register accept message containing information about the one or more PoAs of the GPA to the UE that made the register request; and
upon receipt of a paging message requested from a mobile switching center (MSC) or serving general packet radio service (GPRS) support node (SGSN) to the UE, transmitting a paging request message to all the PoAs of the GPA.

6. The method of claim 5, wherein the paging area is comprised of geographically adjacent PoAs and has a range for transmitting the paging request message once.

7. The method of claim 5, further comprising:
upon transmission of a register update message from the UE after moving to a PoA outside of the GPA, storing information of a GPA corresponding to the PoA where the UE is located; and
transmitting a paging request message to all PoAs of the stored paging area when there is a message to be transmitted to the UE.

8. A method for location management of a UE in a generic access network (GAN), the method comprising:
transmitting register request information containing ID information corresponding to a PoA where the UE is currently located to a generic access network controller (GANC);
storing the register accept message transmitted from the GANC, wherein the register accept message contains information of each GPA (GAN paging area) having one or more PoAs; and
performing a location register update procedure with the GANC when moving to a PoA that is not contained in the GPA.

9. The method of claim 8, wherein said performing a location register update procedure includes transmitting a register update message containing the PoA information, to which the UE moved, to the GANC.

10. The method of claim 8, wherein the UE maintains an idle mode when moving to a PoA contained in the information of the GPA and being in the idle mode.

11. The method of claim 8, wherein the GPA is comprised of geographically adjacent PoAs and has a range for transmitting a paging request message once.
